# EUROPEAN PATENT SPECIFICATION

(11) **EP 3 101 820 B1**
(45) Date of publication and mention of the grant of the patent: **29.08.2018**
(21) Application number: 15382290.3
(22) Date of filing: 02.06.2015
(51) Int. Cl.: H04B 7/185, B64D 45/00

(54) **SYSTEM AND METHOD FOR VERIFYING ACARS MESSAGES**
SYSTEM UND VERFAHREN ZUR VERIFIZIERUNG VON ACARS-NACHRICHTEN
SYSTÈME ET PROCÉDÉ DE VÉRIFICATION DE MESSAGES ACARS

(43) Date of publication of application: 07.12.2016
(73) Proprietor: The Boeing Company, Chicago, IL 60606-1596 (US)
(72) Inventor: Taboso Ballesteros, Pedro, 28042 Madrid (ES); Rodriguez Montejanoi, Rosa Maria, 28042 Madrid (ES); Garcia Perez, Javier, 28042 Madrid (ES)
(74) Representative: Carvajal y Urquijo, Isabel

(56) References cited:
- FR-A1- 2 898 445
- ROY A: "Security strategy for us air force to use commercial data link", DIGITAL AVIONICS SYSTEMS CONFERENCES, 2000. PROCEEDINGS. DASC. THE 19T H 7-13 OCTOBER 2000, PISCATAWAY, NJ, USA,IEEE, vol. 2, 7 October 2000 (2000-10-07), pages 7.E.4_1-7.E.4_8, XP010522799, ISBN: 978-0-7803-6395-3
- BEN MAHMOUD M S ET AL: "An aeronautical data link security overview", DIGITAL AVIONICS SYSTEMS CONFERENCE, 2009. DASC '09. IEEE/AIAA 28TH, IEEE, PISCATAWAY, NJ, USA, 23 October 2009 (2009-10-23), pages 4.A.4-1, XP031575919, ISBN: 978-1-4244-4078-8

## Description

### FIELD OF THE INVENTION

This disclosure relates to system and method for verifying messages in aircraft/ ground-entities networks. More specifically, the present disclosure provides a system and method for verifying ACARS messages between aircraft and ground entities. The provided system and method for verifying messages detect attacks hidden in ACARS messages. More advantageously, ones the attack is detected, the system and method for verifying messages provides protective actions.

### BACKGROUND OF THE INVENTION

The Aircraft Communications Addressing and Reporting System (ACARS) is an addressable, digital data link communication system developed in 1978 by ARINC which allows real-time transmission of information between aircraft and ground entities, namely the Airlines Operations (AOC) and Air Traffic Control Centers (ATC). Depending on where they are flying, ACARS-equipped aircraft make use of three different transmission media to communicate with the ground (VHF, HF and satellite), where a Communication Services Provider (CSP) routes the ACARS messages to the AOC/ATC centers, and vice versa.

The ACARS messages are susceptible of being intercepted by a pirate that could send false messages that supposedly originated from an aircraft or a ground station. A partial solution to this problem is disclosed in the patent application with publication number FR2898445A1 and titled *"Procede et dispositive de detection de tentatives d'intrusion sur une liaison de communication entre un aeronef et une station sol".* FR2898445A1 discloses a method based on security levels associated with each message received at the aircraft using ACARS systems.

The ACARS messages are susceptible of being intercepted by a pirate that could send false messages that supposedly originated from an aircraft or a ground station. A partial solution to this problem is disclosed in the patent application with publication number FR2898445A1 and titled *"Procede et dispositive de detection de tentatives d'intrusion sur une liaison de communication entre un aeronef et une station sol".* FR2898445A1 discloses a method based on security levels associated with each message received at the aircraft using ACARS systems.

### SUMMARY OF THE INVENTION

A first aspect of the present invention is to provide a system for verifying ACARS messages received at an aircraft and emitted from a ground entity, both provided with Aircraft Communications Addressing and Reporting Systems "ACARS". The system comprises: a database having attack data; a flight data acquisition module configured to gather real-time flight parameters from aircraft systems; an auxiliary module configured to convert ACARS messages into a preformatted data; a detection module configured to process the preformatted data; and, a protection module configured to perform protecting actions. The detection module is further configured to perform in parallel at least one of the following scanning actions: an statistical analysis; a grammatical validation; and, a semantic inspection. The scanning actions to be preformatted over the preformatted data based at least on the attack data and on the real-time flight parameters so that the detection module is able to detect an attack, thus informing to the protection module to perform a protecting action.

In one embodiment, the statistical analysis includes for the database to comprise at least the following information as the attack data: list of patterns for identified attacks, allowable frequencies of transmission and operational contexts. The detection module compares the preformatted data with the information comprised in the database for the real-time flight parameters above mentioned.

In one or more embodiments, the grammatical validation includes for the database to comprise at least the following information as the attack data: an ACARS messages protocol and an ACARS messages format. The detection module compares the preformatted data with the ACARS messages protocol and the ACARS messages format looking for a derivation of said ACARS messages protocol, of said ACARS messages format, or both.

In one or more embodiments, the semantic inspection includes for the database to comprise as the attack data at least a list of words that are considered a source of risk. The detection module performs a word-by-word analysis looking for a word of the list.

In one or more embodiments, the auxiliary module further includes a reassembling processor for ordering and mergering every raw ACARS message composing a multi-block messages, and a bit-to-hex converter for translating bit-oriented messages into character-oriented messages.

In one or more embodiments, the flight data acquisition module further includes an acquisition processor for processing flight parameters. The flight parameters being at least: aircraft performance parameters from the Aircraft Condition Monitoring System "ACMS", Digital Flight Data Acquisition Unit "DFDAU", or both. The positional data acquired from the Global Navigation Satellite System "GNSS" and/or Inertial Navigation System "INS".

In one or more embodiments, the auxiliary module further includes a Human Machine Interface "HMI", which in turns includes outputs for displaying information and inputs for customizing the system.

In one or more embodiments, the protection module further includes: a manager sub-module for receiving the inputs from the detection module and organize them, and forwarding inputs from the detection module to the relevant protection sub-module; a messages filter sub-module for blocking the detected ACARS messages containing an attack; a notifier sub-module for notifying the flight crew, via a Multifunction Control Display Unit "MCDU", a notification/alerts display, that an attack is detected and for proposing corrective actions; an alerts generator sub-module for alerting the flight crew, via a Multifunction Control Display Unit "MCDU", a notification/alerts display, that certain types of attacks are detected and for proposing contingency procedures.

In a second aspect of the present invention, a method is provided for verifying ACARS messages received at an aircraft and emitted from a ground entity, both provided with Aircraft Communications Addressing and Reporting Systems "ACARS". The method including the following steps: i) providing a database having attack data; ii) gathering real-time flight parameters; iii) converting ACARS messages into a preformatted data; iv) performing in parallel at least one of the following scanning actions between the preformatted data and both, the real-time flight parameters and the attack data for detecting an attack: a) an statistical analysis; b) a grammatical validation; and, c) a semantic inspection; and, finally, v) providing an alert in case one of the scanning actions detects an attack.

In one or more embodiments, the method may include that the statistical analysis comprises comparing the preformatted data with the attack data comprised in the database for said flight parameters. The attack data being at least: a list of patterns for identified attacks, allowable frequencies of transmission and operational contexts.

In one or more embodiments, the method may include that the grammatical validation comprises comparing the preformatted data with an ACARS messages protocol and an ACARS messages format looking for a derivation of said ACARS messages protocol, of said ACARS messages format, or both. The ACARS messages protocol and the ACARS messages format being the attack data comprised in the database.

In one or more embodiments, the method may include that the semantic inspection comprises performing a word-by-word analysis looking for a word of a list of words which are considered as a source of risk. The list of words being the attack data comprised in the database.

A third aspect of the present invention is to provide the use of the system described in one or more of the above mentioned embodiments for verifying ACARS messages between an aircraft and a ground entity.

A fourth aspect of the present invention is to provide a computer readable medium having stored therein a computer program that when loaded onto an aircraft, configures the ACARS Management Unit according to any of the described embodiments of the system for verifying ACARS messages.

A fifth aspect of the present invention is to provide an aircraft that includes a system according to any of described embodiments for verifying ACARS messages between the aircraft and a ground entity.

### BRIEF DESCRIPTION OF THE DRAWINGS

The novel features believed characteristic of the illustrative embodiments are set forth in the appended claims. The illustrative embodiments, however, as well as a preferred mode of use, further objectives and features thereof, will be best understood by reference to the following detailed description of an illustrative embodiment of the present disclosure when read in conjunction with the accompanying drawings, wherein:
**Figure 1** illustrates an exemplary ACARS network with an intruder.
**Figure 2** illustrates an exemplary system for verifying ACARS messages with a detection module depicted in detail.
**Figure 3** illustrates an exemplary protection module included in the system for verifying ACARS messages.
**Figure 4** includes a flow chart description of an exemplary method for verifying ACARS messages.
**Figure 5** includes a flow chart description of an exemplary scanning actions included in the method for verifying ACARS messages.

### DETAILED DESCRIPTION

The present disclosure describes embodiments of a system for verifying ACARS (Aircraft Communications Addressing and Reporting Systems) messages between an aircraft and a ground entity. The disclosed verification system and method are effective against attackers which use ACARS messages as a supporting platform for carrying out their attacks. Advantageously, the disclosed verification system and method are focused on the ACARS messages received at the aircraft. Thus, the number of ACARS messages exchanged between the aircraft and the ground entities is not incremented due to the implementation of the disclosed verification system and method. Consequently, it represents an advance over those security inventions of the prior art that use encryption techniques.

The disclosed verification system and method provide effective protection against known attacks (e.g., malicious code injection, malicious messages injection, eavesdropping, etc.) while providing alternatives to the security solutions existent currently. Furthermore, the disclosed verification system and method provide means for learning about new attacks by the way of detecting abnormal behaviors or by the way of being inserted by a user (e.g., airline's security personnel).

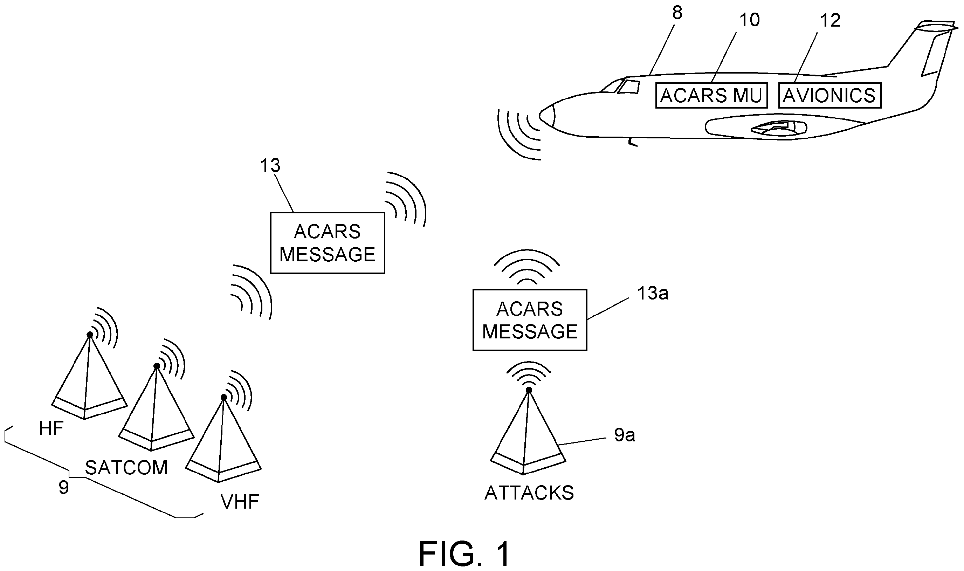

The context in which the disclosed verification system and method are implemented is depicted in **FIG.1****.** Depending on where aircraft are flying, ACARS MU-equipped **10** aircraft make use of three different transmission media to communicate with the ground entity **9** (VHF, HF and satellite). The aircraft **8** receives ACARS messages **13** from the ground entity **9** and it may also receive attacks in the form of ACARS messages **13a** from another ground entity **9a.** The ACARS MU (Aircraft Communications Addressing and Reporting Systems Management Unit) may receive attacks from the ground entity **9a** which may contain instructions for the avionic systems **12** to get the control of the aircraft or any other type of non-allowed operations.

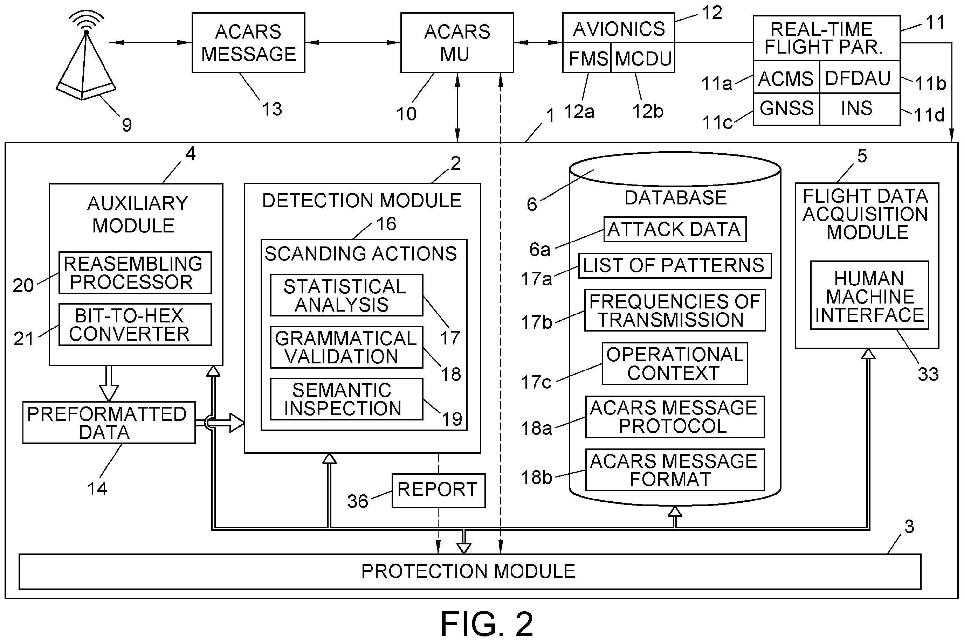

The elements of the system for verifying ACARS messages **1** according to FIG. 2 may contain the database **6** for storing all kind of information related to the system **1;** the flight data acquisition module **5** configured to gather real-time flight parameters **11** from aircraft systems **12;** the auxiliary module **4** configured to convert ACARS messages into the preformatted data **14;** the detection module **2** configured to process the preformatted data; the protection module **3** configured to perform protecting actions. The above disclosed elements (2,3,4,5,6) may be directly connected or through any other element of the system. The implementation of the disclosed system shown in **FIG. 2** shows that elements of the system are directly connected one to each other.

The system for verifying ACARS messages **1** according to FIG. 2 and also according to any embodiment of the disclosed invention, is connected to the ACARS MU such that the ACARS messages received at the ACARS MU are temporally blocked, analyzed by the ACARS system 1, and, if no risk is detected, the ACARS messages are finally allowed to reach the aircraft systems (avionics) **12.** In case of failure of the disclosed system 1, the aircraft can continue operating as the system does not exist since the ACARS messages would not be blocked at the ACARS MU.

According to the embodiment shown in FIG. 2, the database **6** is connected to the flight data acquisition module **5,** to the auxiliary module **4,** to the detection module **2** and to the protection module **3.** The database **6** is operatively configured to store data that the rest of the elements of the system need. The database **6** according to FIG. 2 may contain: attack data from previous attacks **6a** (e.g. malicious code injection, malicious messages injection, eavesdropping), airline's specific security policies, list of patterns for identified attacks **17a,** frequencies of transmission (number of messages received per time unit) **17b,** operational context (phases of the flight: takeoff, cruise, descent, landing, etc) **17c,** standardized ACARS protocols **18a** and/or standardized ACARS formats **18b.**

According to the embodiment shown in FIG. 2, the auxiliary module **4** may contain the reassembling processor **20** and the bit-to-hex converter **21.** The reassembling processor **20** and the bit-to-hex converter **21** isolated or in combination perform the function of converting the standardized ACARS message in a formatted message (preformatted data) **14** for the detection module to be processed. Then, the auxiliary module **4** receives ACARS messages **13** from the ACARS MU and transforms them to the preformatted data **14.**

Then, the detection module **2** receives ACARS messages **13** in the form of preformatted data 14. The preformatted data 14 is scanned in parallel to perform three actions: the statistical analysis **17,** the grammatical validation **18** and the semantic inspection **19.** The scanning actions can be implemented by a memory and a processor not shown in FIG. 2. To perform each action, the detection module **2** imports the required data from the database **6** and from the flight data acquisition module **5.** Ones at least one of the three actions has been carried out, the detection module **2** creates a report for the protection module **3** which provides an action for protecting the system.

The flight data acquisition module **5** is connected to the aircraft systems **12** that may contain the Flight Management System FMS **12a** and/or Multifunction Control Display Unit **12b,** to receive the real-time flight parameters **11,** i.e., Aircraft Condition Monitoring System ACMS **11a,** Digital Flight Data Acquisition Unit DFDAU **11b,** Global Navigation Satellite System GNSS **11c,** and Inertial Navigation System INS **11d.** The flight data acquisition module **5** may further contain the Human Machine Interface 33 having inputs and outputs. The outputs may be used for displaying information about the system **1,** reports created by the detection module **2** or the protection module **3,** or both. The inputs may be used to update the system, update information of registered attackers and update airline's specific security policies.

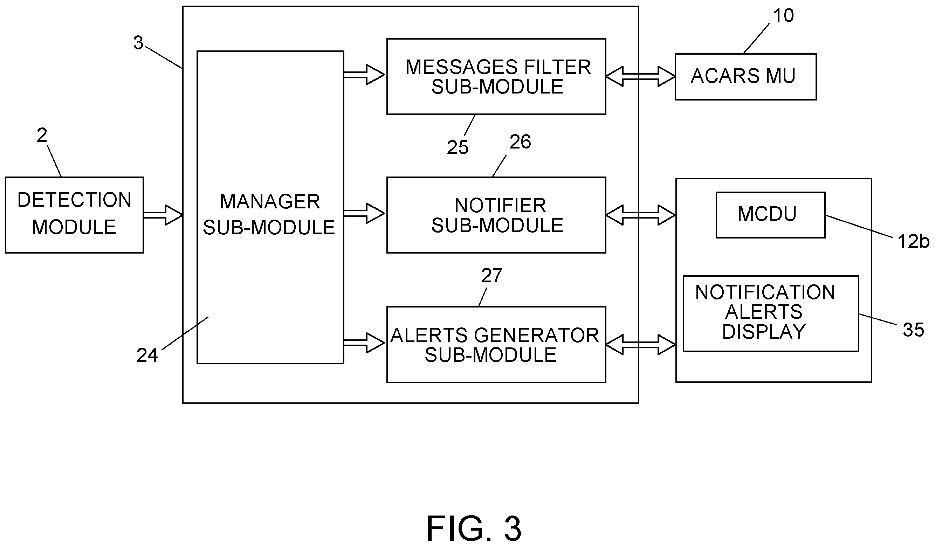

The protection module **3** shown in FIG. 2 is depicted in detail in FIG. 3. Therefore, according to the embodiment of FIG.3, the detection module **2** reports (sends a report) to the protection module **3** the outcome of the scanning carried out by the detection module **2.** The protection module **3** may contain: the manager sub-module **24** for receiving the inputs from the detection module and organize them; the messages filter sub-module **25** for blocking the detected ACARS messages containing an attack; the notifier sub-module **26** for notifying that an attack is detected and for proposing corrective actions; and, the alerts generator sub-module **27** for notifying/alerting that certain types of attacks are detected and for proposing contingency procedures.

The manager sub-module **24** is further configured to forwarding inputs from the detection module **2** to the relevant protection sub-module (25,26, 27).

The messages filter sub-module **25** for blocking the detected ACARS messages containing an attack is further configured to allow those ACARS message operationally tolerable to be forwarded to the ACARS MU since the messages filter sub-module **25** and the ACARS MU are directly connected. The notifier sub-module **26** notifies the flight crew, via the Multifunction Control Display Unit "MCDU" **12b** or via the notification/alerts display **35,** that an attack is detected and proposes corrective actions. The alerts generator sub-module **27** alerts the flight crew, via the Multifunction Control Display Unit "MCDU" **12b** or via the notification/alerts display **35,** that certain types of attacks are detected and proposes contingency procedures. The Multifunction Control Display Unit "MCDU" **12b** and the notification/alerts display **35** are directly connected to the protection module **3.**

In another embodiment of the invention, the Human Machine Interface **33** can replace the Multifunction Control Display Unit "MCDU" **12b** or the notification/alerts display **35.**

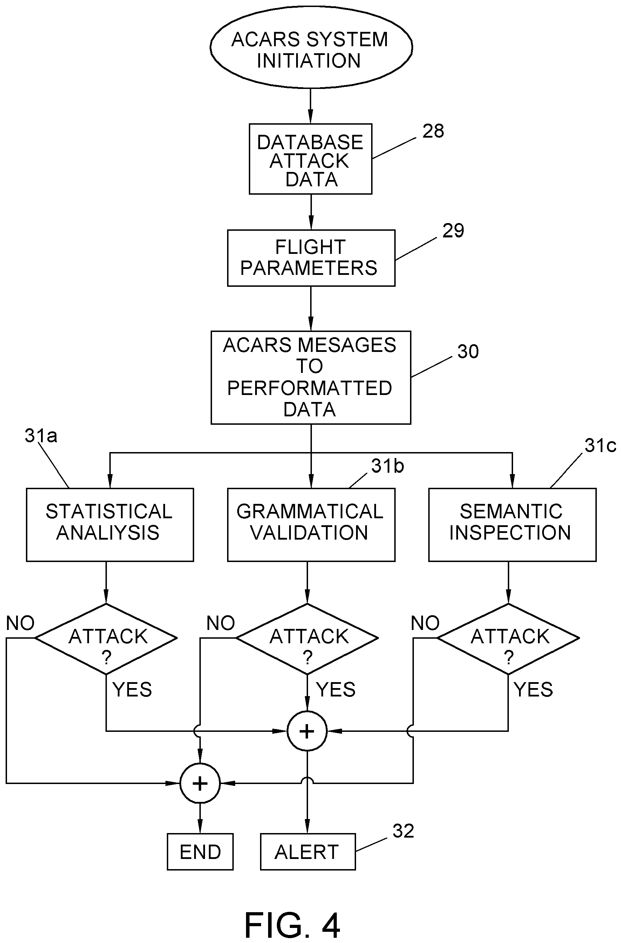

In another aspect of the present invention, an embodiment of the method for verifying ACARS messages as shown in FIG4 is provided. Since the provided method verifies the ACARS messages of the ACARS systems, the step zero is to initiate the ACARS systems. The further steps of the method may contain:
i) providing **28** a database having attack data;
ii) gathering **29** real-time flight parameters;
iii) converting **30** ACARS messages into a preformatted data;
iv) performing, in parallel, the following scanning actions between the preformatted data and both, the real-time flight parameters and the attack data for detecting an attack: an statistical analysis **31a;** a grammatical validation **31b;** and, a semantic inspection **31c;**

In case one of the scanning actions detects an attack, an alert is provided. Otherwise, the method ends for only one interaction. For two or more interaction, steps i) to iv) are repeated with fresh information, i.e., if an attack is detected, the database is updated. It is obvious that real-time flight parameters and ACARS messages change with time.

In a one embodiment of the invention, the provided alert is a report that can be used to initiate protective actions and it can also be used to post-flight statistical analyses. The latter may imply for the airline's security procedures to be checked or updated, thus forming new or updated detection criteria.

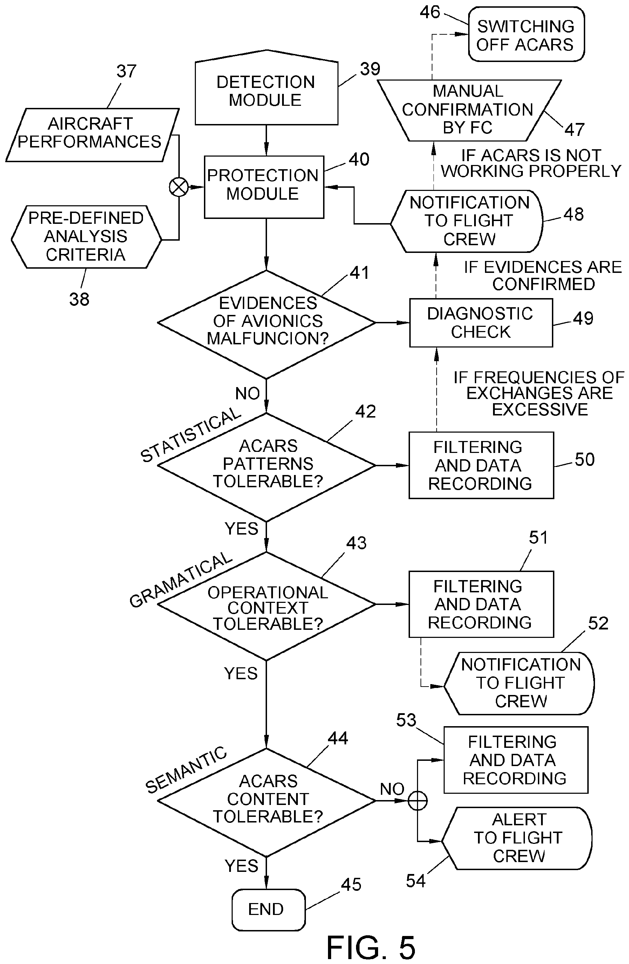

Referring to **FIG. 5****,** an embodiment of the scanning actions performed in step iv) is shown. The inputs for initiating the scanning actions are: the attack reports **39** from the detection module, the aircraft performance data **37** (real-time flight parameters including data related to the current phase of flight) and the pre-defined analyses criteria **38.** The scanning actions may imply to check whether there are evidences of avionics malfunction **41.** If positive, a diagnostic check **49** is carried out to confirm the malfunction. So, if evidences are confirmed, the flight crew is notified **48** and the protection module updated. Then, if ACARS system is not working properly, the flight crew performs a manual confirmation **47** to switching-off **46** the ACARS system in case of confirmation of the failure. If there is no evidence of avionics malfunction, the method checks whether the ACARS patterns are tolerable (statistical analysis). In negative case, a filtering and data recording action **50** is carried out so that if frequencies of exchanges are excessive, a diagnostic check **49** is carried out to confirm the malfunction. One again, if evidences are confirmed, the flight crew is notified **48** and the protection module updated. Then, if ACARS system is not working properly, the flight crew performs a manual confirmation **47** to switching-off **46** the ACARS system in case of confirmation of the failure. If the ACARS patterns are tolerable, the method checks whether the operational context is tolerable (grammatical validation). In negative case, a filtering and data recording action **51** is carried out, thus issuing a notification to the flight crew **52.** If the operational context is tolerable, then the method checks whether the ACARS content is tolerable (semantic inspection). In negative case, a filtering and data recording action **53** is carried out and the flight crew is alerted **54.** In positive case, method ends.

The description of the different advantageous implementations has been presented for purposes of illustration and description, and is not intended to be exhaustive or limited to the implementations in the form disclosed. Many modifications and variations will be apparent to those of ordinary skill in the art. Furthermore, different advantageous implementations may provide different advantages as compared to other advantageous implementations. Other examples are intended to be within the scope of the claims if they have structural elements that do not differ from the literal language of the claims, or if they include equivalent structural elements with unsubstantial differences from the literal language of the claims.

## Claims

1. A system for verifying ACARS messages (1) received at an aircraft and emitted from a ground entity, both provided with Aircraft Communications Addressing and Reporting Systems "ACARS", the system is **characterised in that** it comprises:
i) a database (6) having attack data (6a);
ii) a flight data acquisition module (5) configured to gather real-time flight parameters (11) from aircraft systems (12);
iii) an auxiliary module (4) configured to convert ACARS messages into a preformatted data (14);
iv) a detection module (2) configured to process the preformatted data;
v) a protection module (3) configured to perform protecting actions;
wherein the detection module (2) is further configured to perform in parallel at least one of the following scanning actions (16):
• an statistical analysis (17);
• a grammatical validation (18);
• a semantic inspection (19);
over the preformatted data (14) based at least on the attack data (6a) and on the real-time flight parameters (11) so that the detection module (2) is able to detect an attack, thus informing to the protection module (3) to perform a protecting action.

2. The system of claim 1, wherein the statistical analysis (17) comprising for the database (6) to comprise at least the following information as the attack data (6a): list of patterns (17a) for identified attacks, allowable frequencies of transmission (17b) and operational contexts (17c); so that the detection module (2) compares the preformatted data (14) with the information comprised in the database (6) for said real-time flight parameters (11).

3. The system of claim 1, wherein the grammatical validation (18) comprising for the database (6) to comprise at least the following information as the attack data (6a): an ACARS messages protocol (18a) and an ACARS messages format (18b); so that the detection module (2) compares the preformatted data (14) with the ACARS messages protocol (18a) and the ACARS messages format (18b) looking for a derivation of said ACARS messages protocol, of said ACARS messages format, or both.

4. The system of claim 1, wherein the semantic inspection (19) comprising for the database (6) to comprise as the attack data (6a) at least a list of words that are considered a source of risk; so that the detection module (2) performs a word-by-word analysis looking for a word of said list.

5. The system of claim 1, wherein the auxiliary module (4) further comprising a reassembling processor (20) for ordering and mergering every raw ACARS message composing a multi-block messages, and a bit-to-hex converter (21) for translating bit-oriented messages into character-oriented messages.

6. The system of claim 1, wherein flight data acquisition module (5) further comprising an acquisition processor for processing flight parameters; said flight parameters being at least: aircraft performance parameters from the Aircraft Condition Monitoring System "ACMS" (11a), Digital Flight Data Acquisition Unit "DFDAU" (11b), or both; positional data from the Global Navigation Satellite System "GNSS" (11c) and Inertial Navigation System "INS" (11d).

7. The system of claim 1, wherein the auxiliary module (4) further comprising a Human Machine Interface "HMI" (33), which in turns comprises outputs for displaying information and inputs for customizing the system.

8. The system of claim 1, wherein the protection module (3) further comprising:
• a manager sub-module (24) for receiving the inputs from the detection module (2) and organize them, and forwarding inputs from the detection module (2) to the relevant protection sub-module;
• a messages filter sub-module (25) for blocking the detected ACARS messages containing an attack;
• a notifier sub-module (26) for notifying the flight crew, via a Multifunction Control Display Unit "MCDU" (12b), a notification/alerts display (35), that an attack is detected and for proposing corrective actions;
• an alerts generator sub-module (27) for alerting the flight crew, via a Multifunction Control Display Unit "MCDU" (12b), a notification/alerts display (35), that certain types of attacks are detected and for proposing contingency procedures.

9. A method for verifying ACARS messages received at an aircraft and emitted from a ground entity, both provided with Aircraft Communications Addressing and Reporting Systems "ACARS", the method is **characterised in that** it comprises:
i) providing (28) a database having attack data;
ii) gathering (29) real-time flight parameters;
iii) converting (30) ACARS messages into a preformatted data;
iv) performing (31) in parallel at least one of the following scanning actions between the preformatted data and both, the real-time flight parameters and the attack data for detecting an attack:
a) an statistical analysis (31a);
b) a grammatical validation (31b); and,
c) a semantic inspection (31c);
v) providing (32) an alert in case one of the scanning actions detects an attack.

10. The method of claim 9, wherein the statistical analysis (31a) comprises comparing the preformatted data with the attack data comprised in the database for said flight parameters; the attack data being at least: a list of patterns for identified attacks, allowable frequencies of transmission and operational contexts.

11. The method of claim 9, wherein grammatical validation (31b) comprises comparing the preformatted data with an ACARS messages protocol and an ACARS messages format looking for a derivation of said ACARS messages protocol, of said ACARS messages format, or both; the ACARS messages protocol and the ACARS messages format being the attack data comprised in the database.

12. The method of claim 9, wherein semantic inspection (31c) comprises performing a word-by-word analysis looking for a word of a list of words which are considered as a source of risk; said list of words being the attack data comprised in the database.

13. A computer readable medium having stored therein a computer program that when loaded onto an aircraft (8), configures the ACARS Management Unit (10) according to any of claims 9 to 12 so that the ACARS Management Unit (10) is able to further verify ACARS messages (13, 13a).

14. An aircraft (8) comprising a system according to any of claims 1 to 8 for verifying ACARS messages (13, 13a) between the aircraft and a ground entity (9,9a).

## Patentansprüche

1. System zum Verifizieren von ACARS-Nachrichten (1), die an einem Luftfahrzeug empfangen und von einer Bodeneinheit ausgesendet werden, die beide mit einem Kommunikations-, Adressierungs- und Meldesystem für Luftfahrzeuge "ACARS (engl. Aircraft Communications Addressing and Reporting System)" bereitgestellt sind, wobei das System **dadurch gekennzeichnet ist, dass** es Folgendes umfasst:
i) eine Datenbank (6) mit Angriffsdaten (6a);
ii) ein Flugdatenerfassungsmodul (5), das konfiguriert ist, Flugparameter (11) in Echtzeit von Luftfahrzeugsystemen (12) zu erfassen;
iii) ein Hilfsmodul (4), das konfiguriert ist, ACARS-Nachrichten in vorformatierte Daten (14) umzuwandeln;
iv) ein Erkennungsmodul (2), das konfiguriert ist, die vorformatierten Daten zu verarbeiten;
v) ein Schutzmodul (3), das konfiguriert ist, Schutzaktionen durchzuführen; wobei das Erkennungsmodul (2) ferner konfiguriert ist, parallel mindestens eine der folgenden Absuchaktionen (16) durchzuführen:
• eine statistische Analyse (17);
• eine grammatikalische Bestätigung (18);
• eine semantische Überprüfung (19);
über die vorformatierten Daten (14) basierend mindestens auf den Angriffsdaten (6a) und auf den Flugparametern (11) in Echtzeit, sodass das Erkennungsmodul (2) in der Lage ist, einen Angriff zu erkennen, wodurch es dem Schutzmodul (3) mitteilt, eine Schutzaktion durchzuführen.

2. System nach Anspruch 1, wobei die statistische Analyse (17) umfasst, dass die Datenbank (6) mindestens die folgenden Informationen als die Angriffsdaten (6a) umfasst: eine Liste von Mustern (17a) für identifizierte Angriffe, zulässige Übertragungsfrequenzen (17b) und Betriebskontexte (17c); sodass das Erkennungsmodul (2) die vorformatierten Daten (14) mit den in der Datenbank (6) enthaltenen Informationen für die Flugparameter (11) in Echtzeit vergleicht.

3. System nach Anspruch 1, wobei die grammatikalische Überprüfung (18) umfasst, dass die Datenbank (6) mindestens die folgenden Informationen als die Angriffsdaten (6a) umfasst: ein ACARS-Nachrichtenprotokoll (18a) und ein ACARS-Nachrichtenformat (18b); sodass das Erkennungsmodul (2) die vorformatierten Daten (14) mit dem ACARS-Nachrichtenprotokoll (18a) und dem ACARS-Nachrichtenformat (18b), die nach einer Ableitung des ACARS-Nachrichtenprotokolls des ACARS-Nachrichtenformats oder beidem suchen, vergleicht.

4. System nach Anspruch 1, wobei die semantische Überprüfung (19) umfasst, dass die Datenbank (6) mindestens eine Liste von Wörtern als die Angriffsdaten (6a) umfasst, die als eine Risikoquelle angesehen werden; sodass das Erkennungssmodul (2) eine Wort-für-Wort-Analyse durchführt, die nach einem Wort der Liste sucht.

5. System nach Anspruch 1, wobei das Hilfsmodul (4) ferner einen Wiederzusammensetzungs-Prozessor (20) zum Ordnen und Zusammenführen jeder rohen ACARS-Nachricht, die eine Mehrblocknachricht bildet, und einen Bit-in-Hexadezimal-Wandler (21) zum Übersetzen bitorientierter Nachrichten in zeichenorientierte Nachrichten umfasst.

6. System nach Anspruch 1, wobei das Flugdatenerfassungsmodul (5) ferner einen Erfassungsprozessor zum Verarbeiten von Flugparametern umfasst; wobei die Flugparameter mindestens folgende sind: Flugleistungsparameter aus dem Flugzeugzustandsüberwachungssystem "ACMS (engl. Aircraft Condition Monitoring System)" (11a), der digitalen Flugdatenerfassungseinheit "DFDAU (engl. Digital Flight Data Acquisiton Unit)" (11b) oder beidem; Positionsdaten aus dem globalen Navigationssatellitensystem "GNSS" (11c) und dem Trägheitsnavigationssystem "INS (engl. Inertial Navigation System)" (11d).

7. System nach Anspruch 1, wobei das Hilfsmodul (4) ferner eine Mensch-Maschine-Schnittstelle "MMS" (33) aufweist, die abwechselnd Ausgaben zum Anzeigen von Informationen und Eingaben zum Anpassen des Systems umfasst.

8. System nach Anspruch 1, wobei das Schutzmodul (3) ferner Folgendes umfasst:
• ein Mangager-Untermodul (24) zum Empfangen der Eingaben von dem Erkennungsmodul (2) und zum Organisieren derselben und zum Weiterleiten von Eingaben von dem Erkennungsmodul (2) zu dem entsprechenden Schutz-Untermodul;
• ein Nachrichtenfilter-Untermodul (25) zum Sperren der erkannten ACARS-Nachrichten, die einen Angriff enthalten;
• ein Benachrichtigungs-Untermodul (26) zum Benachrichtigen der Flugbesatzung über eine multifunktionale Steuer- und Anzeigeeinheit "MCDU (engl. Multifunction Control Display Unit)" (12b), eine Benachrichtigungs-/Alarmanzeige (35), dass ein Angriff erkannt wird, und zum Vorschlagen von Korrekturmaßnahmen;
• ein Alarmgeneratoruntermodul (27) zum Alarmieren der Flugbesatzung über eine multifunktionale Steuer- und Anzeigeeinheit "MCDU" (12b), eine Benachrichtigungs-/Alarmanzeige (35), dass bestimmte Arten von Angriffen erkannt werden, und zum Vorschlagen von Notfallverfahren.

9. Verfahren zum Verifizieren von ACARS-Nachrichten, die an einem Luftfahrzeug empfangen und von einer Bodeneinheit ausgesendet werden, die beide mit einem Kommunikations-, Adressierungs- und Meldesystem für Luftfahrzeuge "ACARS" bereitgestellt sind, wobei das Verfahren **dadurch gekennzeichnet ist, dass** es Folgendes umfasst:
i) Bereitstellen (28) einer Datenbank mit Angriffsdaten;
ii) Erfassen (29) von Flugparametern in Echtzeit;
iii) Konvertieren (30) von ACARS-Nachrichten in vorformatierte Daten;
iv) paralleles Durchführen (31) mindestens einer der folgenden Absuchaktionen zwischen den vorformatierten Daten und sowohl den Flugparametern in Echtzeit als auch den Angriffsdaten zum Erkennen eines Angriffs:
a) eine statistische Analyse (17);
b) eine grammatikalische Bestätigung (31b) und
c) eine semantische Überprüfung (31c); und
v) Bereitstellen (32) einer Warnung, falls eine der Absuchaktionen einen Angriff erkennt.

10. Verfahren nach Anspruch 9, wobei die statistische Analyse (31a) das Vergleichen der vorformatierten Daten mit den Angriffsdaten, die in der Datenbank für die Flugparameter enthalten sind, umfasst; wobei die Angriffsdaten mindestens folgende sind: eine Liste von Mustern für identifizierte Angriffe, zulässige Frequenzen der Übertragung und Betriebskontexte.

11. Verfahren nach Anspruch 9, wobei die grammatikalische Bestätigung (31b) das Vergleichen der vorformatierten Daten mit einem ACARS-Nachrichtenprotokoll und einem ACARS-Nachrichtenformat, das nach einer Ableitung des ACARS-Nachrichtenprotokolls, des ACARS-Nachrichtenformats oder beider sucht, umfasst; wobei das ACARS-Nachrichtenprotokoll und das ACARS-Nachrichtenformat die in der Datenbank enthaltenen Angriffsdaten sind.

12. Verfahren nach Anspruch 9, wobei die semantische Überprüfung (31c) das Durchführen einer Wort-für-Wort-Analyse umfasst, die nach einem Wort einer Liste von Wörtern sucht, die als eine Risikoquelle betrachtet werden; wobei die Liste von Wörtern die in der Datenbank enthaltenen Angriffsdaten sind.

13. Computerlesbares Medium, in dem ein Computerprogramm gespeichert ist, das, wenn es auf ein Luftfahrzeug (8) geladen wird, die ACARS-Verwaltungseinheit (10) nach einem der Ansprüche 9 bis 12 konfiguriert, sodass die ACARS-Verwaltungseinheit (10) in der Lage ist, ferner ACARS-Nachrichten (13, 13a) zu verifizieren.

14. Luftfahrzeug (8), das ein System nach einem der Ansprüche 1 bis 8 zum Verifizieren von ACARS-Nachrichten (13, 13a) zwischen dem Luftfahrzeug und einer Bodeneinheit (9, 9a) umfasst.

## Revendications

1. Système pour vérifier les messages de ACARS (1) reçus à un aéronef et émis depuis une entité au sol, pourvus tous les deux de systèmes d'adressage et de compte rendu de communications d'aéronef « ACARS », le système étant **caractérisé en ce qu'**il comprend :
i) une base de données (6) ayant des données d'attaque (6a) ;
ii) un module d'acquisition de données de vol (5) configuré pour rassembler des paramètres de vol en temps réel (11) à partir des systèmes d'aéronef (12) ;
iii) un module auxiliaire (4) configuré pour convertir les messages ACARS en données préformatées (14) ;
iv) un module de détection (2) configuré pour traiter les données préformatées ;
v) un module de protection (3) configuré pour réaliser des actions de protection ;
dans lequel le module de détection (2) est configuré en outre pour réaliser en parallèle au moins l'une des actions de balayage suivantes (16) :
• une analyse statistique (17) ;
• une validation grammaticale (18) ;
• une inspection sémantique (19) ;
sur les données préformatées (14) sur la base d'au moins les données d'attaque (6a) et des paramètres de vol en temps réel (11) de sorte que le module de détection (2) soit capable de détecter une attaque, informant ainsi le module de protection (3) pour réaliser une action de protection.

2. Système selon la revendication 1, dans lequel l'analyse statistique (17) comprend l'inclusion pour la base de données (6) d'au moins les informations suivantes en tant que données d'attaque (6a) : une liste de schémas (17a) pour des attaques identifiées, des fréquences acceptables de transmission (17b) et des contextes fonctionnels (17c); de sorte que le module de détection (2) compare les données préformatées (14) aux informations comprises dans la base de données (6) pour lesdits paramètres de vol en temps réel (11).

3. Système selon la revendication 1, dans lequel la validation grammaticale (18) comprend l'inclusion pour la base de données (6) d'au moins les informations suivantes en tant que données d'attaque (6a) : un protocole de messages de ACARS (18a) et un format de messages de ACARS (18b) ; de sorte que le module de détection (2) compare les données préformatées (14) au protocole de messages de ACARS (18a) et le format de messages de ACARS (18b) cherchant une dérivation dudit protocole de messages de ACARS, dudit format de messages ACARS, ou les deux.

4. Système selon la revendication 1, dans lequel l'inspection sémantique (19) comprend l'inclusion pour la base de données (6) en tant que données d'attaque (6a) d'au moins une liste de mots qui sont considérés comme une source de risque ; de sorte que le module de détection (2) réalise une analyse mot par mot cherchant un mot de ladite liste.

5. Système selon la revendication 1, dans lequel le module auxiliaire (4) comprend en outre un processeur de réassemblage (20) pour ordonner et regrouper chaque message de ACARS brut en composant des messages en multibloc, et un convertisseur bit-à-hex (21) pour traduire des messages orientés bit en messages orientés caractère.

6. Système selon la revendication 1, dans lequel le module d'acquisition de données de vol (5) comprend en outre un processeur d'acquisition pour traiter les paramètres de vol ; lesdits paramètres de vol étant au moins : les paramètres de performance d'aéronef du système de surveillance de l'état de l'aéronef « ACMS » (11a), une unité numérique d'acquisition de données de vol « DFDAU » (11b), ou les deux; des données de position du système de navigation globale par satellite « GNSS » (11c) et du système de navigation inerte « INS » (11d).

7. Système selon la revendication 1, dans lequel le module auxiliaire (4) comprend en outre une Interface humain-machine « HMI » (33), qui comprend à son tour des sorties pour afficher des informations et des entrées pour personnaliser le système.

8. Système selon la revendication 1, dans lequel le module de protection (3) comprend en outre :
• un sous-module gestionnaire (24) pour recevoir les entrées du module de détection (2) et pour les organiser, et des entrées de transmission du module de détection (2) au sous-module de protection correspondant ;
• un sous-module filtre de messages (25) pour bloquer les messages de ACARS détectés contenant une attaque ;
• un sous-module notificateur (26) pour notifier à l'équipage de vol, à travers une unité d'affichage et de commande multifonction « MCDU » (12b), un affichage de notification/alertes (35), qu'une attaque est détectée et pour proposer des actions correctives ;
• un sous-module générateur d'alertes (27) pour alerter l'équipage de vol, à travers une unité d'affichage et de commande multifonction « MCDU » (12b), un affichage de notification/alertes (35), que certains types d'attaques sont détectés et pour proposer des procédures de contingence.

9. Procédé pour vérifier les messages de ACARS reçus à un aéronef et émis depuis une entité au sol, pourvus tous les deux de systèmes d'adressage et de compte rendu de communications d'aéronef « ACARS », le procédé est **caractérisé en ce qu'**il comprend :
i) la fourniture (28) d'une base de données ayant des données d'attaque ;
ii) le rassemblement (29) de paramètres de vol en temps réel ;
iii) la conversion (30) de messages de ACARS en données préformatées ;
iv) la réalisation (31) en parallèle d'au moins l'une des actions de balayage suivantes entre les données préformatées et autant, les paramètres en temps réel que les données d'attaque pour détecter une attaque :
a) une analyse statistique (31a) ;
b) une validation grammaticale (31b) ; et,
c) une inspection sémantique (31c) ;
v) la fourniture (32) d'une alerte dans le cas où l'une des actions de balayage détecterait une attaque.

10. Procédé selon la revendication 9, dans lequel l'analyse statistique (31a) comprend la comparaison des données préformatées avec les données d'attaque comprises dans la base de données pour lesdits paramètres de vol ; les données d'attaque étant au moins : une liste de schémas pour les attaques identifiées, des fréquences acceptables de transmission et des contextes fonctionnels.

11. Procédé selon la revendication 9, de sorte que la validation grammaticale (31b) comprend la comparaison des données préformatées avec le protocole de messages de ACARS et le format de messages de ACARS cherchant une dérivation dudit protocole de messages de ACARS, dudit format de messages de ACARS, ou les deux ; le protocole de messages de ACARS et le format de messages ACARS étant les données d'attaque comprises dans la base de données.

12. Procédé selon la revendication 9, dans lequel l'inspection sémantique (31c) comprend la réalisation d'une analyse mot-par-mot cherchant un mot d'une liste de mots qui sont considérés comme une source de risque ; ladite liste de mots étant les données d'attaque comprises dans la base de données.

13. Support lisible par ordinateur ayant stocké dans celui-ci un programme informatique qui lorsqu'il est chargé à bord d'un aéronef (8), configure l'unité de gestion de ACARS (10) selon l'une quelconque des revendications 9 à 12 de sorte que l'unité de gestion de ACARS (10) soit capable de vérifier en outre les messages de ACARS (13, 13a).

14. Aéronef (8) comprenant un système selon l'une quelconque des revendications 1 à 8 pour vérifier les messages de ACARS (13, 13a) entre l'aéronef et une entité au sol (9, 9a).
